# EUROPÄISCHE PATENTANMELDUNG

(11) **EP 4 400 924 A1**
(43) Veröffentlichungstag der Anmeldung: **17.07.2024**
(21) Anmeldenummer: 23212948.6
(22) Anmeldetag: 29.11.2023
(51) Int. Cl.: G05B 19/401, G05B 19/418

(54) **VERFAHREN ZUM KLASSIFIZIEREN EINES BAUTEILMERKMALS EINES BAUTEILS, VERFAHREN ZUM KLASSIFIZIEREN EINES BAUTEILS, SOWIE VERWENDUNG EINES BAUTEILS**

(30) Priorität: 13.01.2023 DE 102023100791
(71) Anmelder: MTU Aero Engines AG, 80995 München (DE)
(72) Erfinder: Riedmann, Eva, 80995 München (DE); Prioli Ovcar, Telmo Camilo, 80995 München (DE); Danner, Florian, 80995 München (DE)

(57) **Zusammenfassung**

Die Erfindung betrifft ein Verfahren zum Klassifizieren eines Bauteilmerkmals eines Bauteils, insbesondere einer Blisk oder eines Teils einer Blisk für eine Strömungsmaschine, welches mit einem Fertigungsprozess hergestellt ist, wobei das Bauteilmerkmal abhängig von einer ersten Merkmalsspezifikation (11) und von einer zweiten Merkmalsspezifikation (12) für eine Messgröße des Bauteilmerkmals klassifiziert wird, wobei ein zweiter Toleranzbereich der zweiten Merkmalsspezifikation (12) gegenüber einem ersten Toleranzbereich der ersten Merkmalsspezifikation (12) erweitert ist, wobei ein zweiter Geltungsbereich des Bauteils für die zweite Merkmalsspezifikation (12) kleiner als ein erster Geltungsbereich des Bauteils für die erste Merkmalspezifikation (11) ist, wobei der Fertigungsprozess im zweiten Geltungsbereich reproduzierbar und/oder systematisch eine größere mittlere Abweichung der Messgröße als im ersten Geltungsbereich hervorruft.

## Beschreibung

Die Erfindung betrifft ein Verfahren zum Klassifizieren eines Bauteilmerkmals eines Bauteils, insbesondere einer Blisk oder eines Teils einer Blisk für eine Strömungsmaschine. Die Erfindung betrifft weiter ein Verfahren zum Klassifizieren eines Bauteils sowie eine Verwendung eines Bauteils.

Zur Sicherung einer Qualität von Bauteilen, welches mit einem Fertigungsprozess hergestellt ist, werden regelmäßig Bauteilmerkmale, insbesondere Qualitätsparameter des Bauteils, geprüft, ob sich ein Bauteilmerkmal innerhalb eines Toleranzbereiches einer Merkmalsspezifikation bewegt. Ein Bauteilmerkmal des Bauteils kann beispielsweise ein Abmaß oder eine Form des Bauteils, oder eine Rauheit oder eine Welligkeit einer Oberfläche des Bauteils oder dergleichen sein. Insbesondere werden Messgrößen des Bauteilmerkmals des gefertigten Bauteils ermittelt, wobei die Messgröß en anhand der Merkmalsspezifikation überprüft werden. Basierend auf der Prüfung kann das Bauteilmerkmal bzw. das Bauteil klassifiziert werden, beispielsweise als verwendbar oder nicht verwendbar für einen technischen Einsatz.

Üblicherweise ist für das Bauteilmerkmal eine Zeichnungsspezifikation für das gesamte Bauteil mit einem einheitlichen Toleranzbereich definiert, in welchem sich das Bauteilmerkmal bzw. die Messgröße für das Bauteilmerkmal bewegen kann. Bei der Prüfung des Bauteils kann es jedoch vorkommen, dass fertigungsbedingt in einem Bereich des Bauteils die Messgröße den einheitlichen Toleranzbereich wiederholt nicht erfüllt bzw. nicht erfüllen kann. Der einheitliche Toleranzbereich der Zeichnungsspezifikation des Bauteils führt dazu, dass ein Bauteil aufgrund der außerhalb des Toleranzbereiches befindlichen Messgröße als nicht verwendbar klassifiziert werden kann. Beispielsweise kann das Bauteil dann einer erweiterten Prüfung, beispielsweise in Form einer erweiterten Qualitätskontrolle, unterzogen werden, die aufwendig und teuer sein kann. Alternativ muss das Bauteil ausgesondert werden. Insbesondere kann dies gerade bei einer sich stetig wiederholenden Abweichung der Messgröße in einem bestimmten Bereich aufgrund des Fertigungsprozesses zu einer erheblichen Ausschussquote des Bauteils bei einer Serie von Bauteilen führen, die in dem Fertigungsprozess gefertigt werden. Dabei kann es durchaus sein, dass das Bauteil trotz dieser Abweichung für eine technische Verwendung geeignet sein kann, da die Abweichung der Messgröße von dem einheitlichen Toleranzbereich im Hinblick auf die Verwendbarkeit des Bauteils, in einem bestimmten Bereich des Bauteils tolerierbar gewesen wäre.

Es ist somit die Aufgabe der Erfindung, eine effektivere Klassifikation eines Bauteilmerkmals und eines Bauteils bereitzustellen, die zu einer geringeren Ausschussquote bei gleichbleibend hoher Qualität des Bauteilmerkmals und des Bauteils führt, sodass das Bauteil in einer technischen Anwendung verwendet werden kann.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch einen Aspekt der Erfindung ist ein Verfahren zum Klassifizieren eines Bauteilmerkmals eines Bauteils, insbesondere einer Blisk oder eines Teils einer Blisk für eine Strömungsmaschine, bereitgestellt, welches mit einem Fertigungsprozess hergestellt ist. Das Bauteilmerkmal wird abhängig von einer ersten Merkmalsspezifikation und von einer zweiten Merkmalsspezifikation für eine Messgröße des Bauteilmerkmals klassifiziert. Ein zweiter Toleranzbereich der zweiten Merkmalsspezifikation ist gegenüber einem ersten Toleranzbereich der ersten Merkmalsspezifikation erweitert. Ein zweiter Geltungsbereich des Bauteilmerkmals für die zweite Merkmalsspezifikation ist kleiner als ein erster Geltungsbereich des Bauteilmerkmals für die erste Merkmalspezifikation. Der Fertigungsprozess ruft im zweiten Geltungsbereich reproduzierbar und/oder systematisch eine größere mittlere Abweichung der Messgröße als im ersten Geltungsbereich hervor.

Das Bauteilmerkmal kann insbesondere hinsichtlich einer Tolerierbarkeit des Bauteilmerkmals für die bestimmungsgemäße Verwendung des Bauteils klassifiziert werden. Ein Bauteilmerkmal des Bauteils kann beispielsweise ein Abmaß oder eine Form des Bauteils, oder eine Rauheit oder eine Welligkeit einer Oberfläche des Bauteils oder dergleichen sein.

Das Bauteil kann insbesondere in einer technischen Anwendung verwendet werden, beispielsweide durch einen Einbau in eine Maschine. Insbesondere kann das Bauteil eine Blisks (Blade Integrated Disk) oder ein Teil einer Blisk für eine Strömungsmaschine sein.

Das Bauteil ist in einem Fertigungsprozess hergestellt. Insbesondere wird mittels des Fertigungsprozesses eine Vielzahl von Bauteilen auf identische Weise hergestellt, sodass die Vielzahl von Bauteilen im Wesentlichen baugleich seien können.

Erfindungsgemäß wird das Bauteilmerkmal abhängig von einer ersten Merkmalsspezifikation und von einer zweiten Merkmalsspezifikation für eine Messgröße des Bauteilmerkmals klassifiziert.

Die erste Merkmalsspezifikation kann insbesondere eine Nenngröße und den ersten Toleranzbereich für die Messgröße definieren. Die zweite Merkmalsspezifikation kann insbesondere die selbe Nenngröße und den zweiten Toleranzbereich definieren, der gegenüber dem ersten Toleranzbereich erweitert ist. Insbesondere können Limits bzw. Toleranzbereichsgrenzen des zweiten Toleranzbereiches erweitert sein.

Die erste Merkmalsspezifikation ist im ersten Geltungsbereich gültig. Die zweite Merkmalsspezifikation ist im zweiten Geltungsbereich gültig, wobei der zweite Geltungsbereich kleiner als der erste Geltungsbereich ist. Insbesondere befindet sich der zweite Geltungsbereich vollständig innerhalb des ersten Geltungsbereiches. Unter einem Geltungsbereich kann ein lokaler Bereich bzw. Abschnitt des Bauteils verstanden werden, bei welchem die zugehörige zweite Merkmalsspezifikation gilt. Insbesondere können mehrere zweite Merkmalsspezifikation und mehrere zweite Geltungsbereiche definiert sein, wobei jeweils eine zweite Merkmalsspezifikation jeweils genau einem zweiten Geltungsbereich zugeordnet ist.

Beispielsweise kann die erste Merkmalsspezifikation in einer Zeichnungsspezifikation des Bauteils definiert sein. Folglich kann der erste Geltungsbereich dem gesamten Bauteil bzw. der gesamten Oberfläche des Bauteils entsprechen, wobei folglich über das gesamte Bauteil der erste Toleranzbereich der Messgröße definiert sein kann.

Eine Zeichnungsspezifikation, auch als Bauteilspezifikation bezeichnet, kann in Form einer Zeichnung, einer Skizze oder einer Textbeschreibung erstellt werden oder aus einer Kombination dieser Möglichkeiten bestehen. Die Zeichnungsspezifikation enthält beispielsweise die folgenden Angaben: Werkstoffe, Abmessungen, Maße, Toleranzen, Schweißnahtangaben, Oberflächenmerkmale wie eine Welligkeit oder eine Rauheit, etc.

Die Messgröße des Bauteilmerkmals kann insbesondere durch Vermessung des im Fertigungsprozesses gefertigten Bauteils ermittelt werden. Hierzu können standardisierte Messverfahren angewandt werden.

Erfindungsgemäß ruft der Fertigungsprozess des Bauteils im zweiten Geltungsbereich reproduzierbar und/oder systematisch eine größere mittlere Abweichung der Messgröße als im ersten Geltungsbereich hervor. Insbesondere kann die Abweichung der Messgröße im ersten Geltungsbereich innerhalb des ersten Toleranzbereiches liegen, sodass die Messgröße in diesem Bereich als tolerierbar klassifiziert werden kann. Insbesondere kann die größere, mittlere Abweichung der Messgröße im zweiten Bereich außerhalb des ersten Toleranzbereiches liegen. Dadurch, dass die größere, mittlere Abweichung der Messgröße durch den Fertigungsprozess systematisch hervorgerufen wird und somit für alle Bauteile des Fertigungsprozesses reproduzierbar sein kann, kann in dem zweiten Geltungsbereich der zweite Toleranzbereich so erweitert sein, dass die größere, mittlere Abweichung innerhalb des zweiten Toleranzbereiches liegt.

Eine Voraussetzung für die Erweiterung kann hierbei sein, dass die größere, mittlere Abweichung hinsichtlich der Qualität des Bauteils geprüft bzw. überprüft wurde, und nach Feststellung der Tolerierbarkeit der größeren, mittleren Abweichung im zweiten Geltungsbereich der zweite Toleranzbereich entsprechend definiert wurde.

Insbesondere kann das Bauteilmerkmal als tolerierbar klassifiziert werden, wenn die Messgröße des Bauteilmerkmals innerhalb des ersten und/oder des zweiten Toleranzbereiches liegt.

Durch die Erfindung ergibt sich der Vorteil, dass ein Bauteilmerkmal nicht lediglich anhand der Zeichnungsspezifikation hin überprüft und klassifiziert wird, sondern anhand der ersten und der zweiten Merkmalsspezifikation. Da die zweite Merkmalsspezifikation im zweiten Geltungsbereich basierend auf reproduzierbaren und/oder systematisch größeren, aber überprüft tolerierbaren Abweichungen der Messgröße vergleichsweise weniger streng ist, kann es sein, dass das Bauteilmerkmal zwar die erste Merkmalsspezifikation nicht erfüllt, jedoch aber die zweite Merkmalsspezifikation erfüllt. Dadurch, dass es ausreichend sein kann, dass das Bauteilmerkmal die zweite Merkmalsspezifikation im zweiten Geltungsbereich erfüllt, können deutlich mehr Bauteilmerkmale als tolerierbar klassifiziert werden. Insbesondere kann somit eine höhere Anzahl an Bauteilen als tolerierbar und damit als verwendbar klassifiziert werden. Dies führt vorteilhaft dazu, dass bei Nichterfüllung der ersten Merkmalsspezifikation keine erweiterte Prüfung des Bauteils durchgeführt werden muss oder dieses nicht als Ausschuss klassifiziert werden muss, wenn dafür im Gegenzug die zweite Merkmalsspezifikation erfüllt wird. Vorteilhaft kann erreicht werden, dass eine größere Anzahl von Bauteilen direkt nach dem Klassifikationsverfahren bestimmungsgemäß verwendet werden kann. Somit können vorteilhaft Kosten reduziert und eine Ausschussquote des Fertigungsprozesses gesenkt werden.

Zu der Erfindung gehören auch Ausführungsformen, durch die sich zusätzliche Vorteile ergeben.

Eine Ausführungsform sieht vor, dass bei dem Verfahren im zweiten Geltungsbereich eine größere Abweichung der Messgröße als im ersten Geltungsbereich für die bestimmungsgemäße Verwendung des Bauteils tolerierbar ist. Insbesondere kann die größere Abweichung durch den erweiterten, zweiten Toleranzbereich tolerierbar sein.

Vorzugsweise kann anhand des zweiten Toleranzbereiches die Messgröße des Bauteilmerkmals als tolerierbar klassifiziert werden, wohingegen anhand lediglich des ersten, strengeren Toleranzbereiches die Messgröße als nicht tolerierbar klassifiziert werden würde. Vorteilhaft kann es somit sein, dass das Bauteil bestimmungsgemäß verwendet werden kann, wohingegen bei der Klassifizierung lediglich anhand der ersten Merkmalsspezifikation das Bauteil nicht bestimmungsgemäß verwendet werden kann. Somit können vorteilhaft Kosten reduziert und eine Ausschussquote des Fertigungsprozesses gesenkt werden.

Eine Ausführungsform sieht vor, dass die Abweichung hervorgerufen ist durch eine systematische Ungenauigkeit in dem Fertigungsprozess des Bauteils. Bevorzugt wird abhängig von der Klassifikation des Bauteilmerkmals das Bauteil verwendet.

Insbesondere kann die systematische Ungenauigkeit durch einen fertigungstypischen Fertigungsschritt des Fertigungsprozesses hervorgerufen werden, beispielsweise durch ein Absetzen und ein versetztes, erneutes Ansetzen eines Werkzeuges, mittels welchem das Bauteil gefertigt wird. Wird das Bauteilmerkmal als tolerierbar klassifiziert, kann das Bauteil vorzugsweise verwendet werden. Wird das Bauteilmerkmal als nicht tolerierbar klassifiziert, kann das Bauteil vorzugsweise nicht, bzw. nicht direkt verwendet werden, sondern muss weitreichender geprüft werden.

Eine Ausführungsform sieht vor, dass das Bauteilmerkmal eine Welligkeit einer Oberfläche des Bauteils umfasst, wobei die erste und die zweite Merkmalsspezifikation jeweils einen Welligkeitstoleranzbereich definiert. Insbesondere definiert die erste Merkmalsspezifikation einen ersten Welligkeitstoleranzbereich, der dem ersten Toleranzbereich entsprechen kann. Insbesondere definiert die zweite Merkmalsspezifikation einen zweiten Welligkeitstoleranzbereich, der dem zweiten Toleranzbereich entsprechen kann.

Insbesondere kann es vorgesehen sein, dass der zweite Welligkeitstoleranzbereich gegenüber dem ersten Welligkeitstoleranzbereich um einen Wert im Bereich von 5 % bis 300 %, vorzugsweise 5 % bis 100 %, besonders bevorzugt 5 % bis 60 % erweitert ist.

Bei einem Schaufelprofil einer Schaufel kann beispielsweise eine höhere Welligkeit in einem Bereich, insbesondere mittleren Bereich, beispielsweise in einem Bereich von 40 % bis 60 %, insbesondere von 30 % - 70 % einer axialen und/oder radialen Erstreckung, auf einer Druckseite und/oder Saugseite des Schaufelprofils, den Wirkungsgrad und/oder die Strömungsstabilität und/oder die Breite des Betriebsbereichs in einem größerem Maße beeinträchtigen als in einem Bereich einer Vorder- und/oder Hinterkante des Schaufelprofils der Schaufel. Daher kann es besonders vorteilhaft sein, zwei unterschiedliche Welligkeitstoleranzbereiche in unterschiedlichen Geltungsbereichen zu definieren, da hierbei eine Ausschussquote des Fertigungsprozesses bei gleichbleibend hohem Wirkungsgrad deutlich reduziert werden kann.

Die Welligkeit bezieht sich auf eine unebene Oberfläche des Bauteils, insbesondere eine Welle in der Oberfläche, die in einem längeren Abstand als die Rauheit der Oberfläche auftritt. Die Welligkeit kann beispielsweise als eine Abweichung von einer idealen Oberfläche definiert werden, wobei die Welle in einem relativ längeren Abstand auftritt als deren Höhe bzw. Tiefe. Die Welle kann insbesondere anhand deren Welleneigenschaften klassifiziert werden. Die Welleneigenschaften können beispielsweise eine Wellenposition, eine Wellenhöhe, eine Wellenlänge, eine Wellensteigung und weitere Eigenschaften umfassen.

Insbesondere können jeweils die erste Merkmalsspezifikation und die zweite Merkmalsspezifikation zugehörige Toleranzbereiche für die Welleneigenschaften definieren, innerhalb welcher die Welleneigenschaften der Welle liegen müssen, sodass die Merkmalsspezifikation erfüllt ist, beispielsweise hinsichtlich einer Steigung und/oder Amplitude der Welle. Mit anderen Worten können die Merkmalsspezifikationen für die Welligkeit ein jeweiliges Limit bzw. eine jeweilige Toleranzbereichsgrenze definieren, innerhalb welcher die Messgrößen für die Welligkeit liegen müssen, damit die Welligkeit als tolerierbar klassifiziert werden kann.

Eine Ausführungsform sieht vor, dass die erste Merkmalsspezifikation im ersten Geltungsbereich konstant ist, wobei die zweite Merkmalsspezifikation im zweiten Geltungsbereich konstant ist. Insbesondere ist die erste Merkmalsspezifikation, die in der Zeichnungsspezifikation gegeben sein kann, über das gesamte Bauteil unveränderlich.

Eine Ausführungsform sieht vor, dass der zweite Toleranzbereich auf einer aufgrund des Fertigungsprozesses des Bauteils reproduzierbaren Überschreitung des ersten Toleranzbereiches der Messgröße im zweiten Geltungsbereich basiert. Bevorzugt wurde basierend auf einer Analyse hinsichtlich einer Auswirkung der reproduzierbaren Überschreitung auf eine Anforderung des Bauteils im zweiten Geltungsbereich der zweite Toleranzbereich freigegeben.

Unter einer reproduzierbaren Überschreitung kann verstanden werden, dass zumindest zwei, vorzugsweise mehrere Bauteile, die im selben Fertigungsprozess produziert werden, im Wesentlichen die gleichen Abweichungen der Messgröße außerhalb des ersten Toleranzbereiches in dem zweiten Geltungsbereich, also an der gleichen Stelle, aufweisen.

Um den zweiten Toleranzbereich im zweiten Geltungsbereich so definieren zu können, dass die reproduzierbaren Überschreitungen innerhalb des zweiten Geltungsbereiches liegen, müssen die Überschreitungen zunächst freigegeben worden sein, sodass auch der zweite Toleranzbereich freigegeben werden kann. Die Freigabe basiert auf der Analyse der reproduzierbaren Überschreitung, wobei analysiert wird, welche Auswirkung die reproduzierbare Überschreitung auf die Anforderung des Bauteils, beispielsweise auf aerodynamische Eigenschaften der Blisk, hat. Sofern in der Analyse keine Auswirkungen feststellbar sind oder die Auswirkungen so minimal sind, dass diese tolerierbar sind, kann der zweite Toleranzbereich für den zweiten Geltungsbereich, in der die reproduzierbare Überschreitung der Messgröße aufritt, freigegeben werden.

Dies hat den Vorteil, dass das Bauteilmerkmal aufgrund der Abweichung der Messgröße innerhalb des zweiten Toleranzbereiches als tolerierbar klassifiziert werden kann, wohingegen die Abweichungen der Messgröße basierend auf dem ersten Toleranzbereich als nicht tolerierbar klassifiziert werden müsste. Dadurch kann vorteilhaft erreicht werden, dass das Bauteil aufgrund des tolerierbaren Bauteilmerkmals für dessen technischen Zweck direkt verwendet werden kann, ohne dass weitere, aufwendige Prüfungen des Bauteils erfolgen müssen oder das Bauteil ausgesondert werden muss.

Eine Ausführungsform sieht vor, dass die Messgröße mittels einem taktilen oder optischen Messverfahren ermittelt wird. Insbesondere kann somit die Oberfläche des Bauteils vermessen werden. Das jeweilige Messverfahren kann insbesondere einen Datensatz bereitstellen.

Insbesondere kann ein taktiles oder optisches Messverfahren eine Vielzahl von Messpunkten, vorzugsweise eine Punktwolke, bereitstellen, die die Oberfläche bzw. zumindest einen Teil der Oberfläche des Bauteils abbilden kann. Basierend auf der Punktwolke kann folglich die Messgröße ermittelt werden. Beispielsweise können Abstände zwischen Messpunkten ermittelt werden, aber auch die Welligkeit oder Rauheit der Oberfläche basierend auf der Punktwolke.

Eine Ausführungsform sieht vor, dass das Verfahren zumindest teilweise computerimplementiert ist. Dies hat den Vorteil, dass das Verfahren automatisiert werden kann und wiederholbar ist.

Insbesondere erfolgt das Klassifizieren des Bauteilmerkmals basierend auf der Messgröße automatisch. Vorzugsweise kann das Ermitteln der Messgröße aus dem Datensatz des taktilen oder optischen Messverfahrens computerimplementiert erfolgen, sodass das Bauteilmerkmal automatisiert abhängig von der ersten Merkmalsspezifikation und von der zweiten Merkmalsspezifikation für die Messgröße des Bauteilmerkmals klassifiziert werden kann. Ein Ergebnis der Klassifizierung des Bauteilmerkmals kann beispielsweise automatisch ausgegeben werden.

Eine Ausführungsform sieht vor, dass bei dem Verfahren im ersten Geltungsbereich, insbesondere in einem mittleren Bereich einer Druckseite und/oder Saugseite der Blisk oder einer Schaufel der Blisk, eine Abweichung des Bauteilmerkmals, insbesondere einer Welligkeit, eine größere Beeinträchtigung einer ersten Performanceeigenschaft, insbesondere einem Wirkungsgrad, einer Stabilität und/oder ein Betriebsbereich, hat, als im zweiten Geltungsbereich, insbesondere in einem Bereich einer Vorderkante und/oder einer Hinterkante der Schaufel der Blisk. Daher kann es besonders vorteilhaft sein, zwei unterschiedliche Welligkeitstoleranzbereiche in unterschiedlichen Geltungsbereichen zu definieren, da hierbei eine Ausschussquote des Fertigungsprozesses bei gleichbleibend hohem Wirkungsgrad deutlich reduziert werden kann.

Eine Ausführungsform sieht vor, dass bei dem Verfahren der Fertigungsprozess einen Schritt zur Verbesserung eines weiteren Bauteilmerkmals bzw. einer weiteren Messgröße, insbesondere eine Härte und/oder eine Oberflächenbeschaffenheit, umfasst, welche im zweiten Geltungsbereich, insbesondere in einem Bereich einer Vorderkante und/oder einer Hinterkante einer Schaufel der Blisk, einen höheren Beitrag zur Verbesserung einer zweiten Performanceeigenschaft, insbesondere eine Lebensdauer und/oder eine Robustheit, des Bauteils aufweist als im ersten Geltungsbereich. Beispielsweise kann in dem Schritt zur Verbesserung das Bauteil mit Ultraschall bestrahlt werden, um die Performanceeigenschaften des Bauteils zu verbessern.

Eine Ausführungsform sieht vor, dass bei dem Verfahren der Schritt zur Verbesserung des weiteren Bauteilmerkmals im zweiten Geltungsbereich mit einer größeren Intensität ausgeführt wird, als im ersten Geltungsbereich. Beispielsweise kann die Intensität durch die Bestrahlungsrichtung des Bauteils mit Ultraschall eingestellt werden.

Durch einen weiteren Aspekt der Erfindung ist ein Verfahren zum Klassifizieren eines Bauteils, insbesondere einer Blisk oder eines Teils einer Blisk für eine Strömungsmaschine bereitgestellt, welches auf dem erfindungsgemäßen Verfahren zum Klassifizieren des Bauteilmerkmals basiert.

Insbesondere kann ein Bauteil als verwendbar oder nicht verwendbar klassifiziert werden. Die Klassifikation des Bauteils basiert hierbei auf der Klassifikation des Bauteilmerkmals, welches als tolerierbar oder nicht tolerierbar klassifiziert werden kann.

Werden beispielsweise das Bauteilmerkmal bzw. mehrere Bauteilmerkmale als tolerierbar klassifiziert, so kann das Bauteil als verwendbar klassifiziert werden. Wird beispielsweise mindestens ein Bauteilmerkmal als nicht tolerierbar klassifiziert, so kann das Bauteil als nicht verwendbar klassifiziert werden.

Vorzugsweise kann das Bauteil in einer vorgesehenen Anwendung verwendet werden, wenn es als verwendbar klassifiziert wurde. Beispielsweise muss das Bauteil einer weiteren Prüfung unterzogen werden oder ausgesondert werden, wenn es als nicht verwendbar klassifiziert wurde.

Anhand der Klassifizierung des Bauteilmerkmals basierend auf der ersten Merkmalsspezifikation und zusätzlich auf der zweiten, im zweiten Geltungsbereich erweiterten Merkmalsspezifikation kann vorteilhaft erreicht werden, dass eine Ausschussquote des Fertigungsprozesses deutlich reduziert werden kann. Insbesondere kann eine vergleichsweise höhere Quote an Bauteilen ohne weitere Prüfung direkt verwendet werden. Dies spart insbesondere Produktionskosten und Prüfungskapazitäten ein.

Durch einen weiteren Aspekt der Erfindung ist eine Verwendung des Bauteils, insbesondere einer Blisk für eine Strömungsmaschine, vorgesehen. Die Verwendung des Bauteils ist dabei abhängig von dem erfindungsgemäßen Verfahren zum Klassifizieren des Bauteils.

Insbesondere kann das Bauteil Verwendung finden in einer für das Bauteil vorgesehenen technischen Anwendung. Beispielsweise kann die Blisk in die Strömungsmaschine eingebaut bzw. integriert werden.

Eine Ausführungsform der Verwendung sieht vor, dass bei der Verwendung das Bauteil bestimmungsgemäß verwendet wird, insbesondere für den Betrieb eines Flugtriebwerks eingesetzt wird, unter der Voraussetzung, dass die Messgröße im ersten Geltungsbereich die erste Merkmalsspezifikation erfüllt und im zweiten Geltungsbereich die zweite Merkmalsspezifikation erfüllt oder wenn die Messgröße im ersten Geltungsbereich die erste Merkmalsspezifikation erfüllt und im zweiten Geltungsbereich nur die zweite Merkmalsspezifikation erfüllt.

Eine Ausführungsform der Verwendung sieht vor, dass das Bauteil nicht bestimmungsgemäß verwendet wird, wenn die Messgröße die erste Merkmalsspezifikation im ersten Geltungsbereich nicht erfüllt oder die zweite Merkmalsspezifikation im zweiten Geltungsbereich nicht erfüllt.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Im Folgenden ist sind Ausführungsbeispiele der Erfindung beschrieben. Hierzu zeigt:
- **FIG. 1**: ein Ablaufdiagramm eines erfindungsgemäßen Verfahrens zum Klassifizieren eines Bauteilmerkmals gemäß einer bevorzugten Ausführungsform;
- **FIG. 2**: eine schematische Abbildung eines erfindungsgemäßen Verfahrens zum Klassifizieren einer Welligkeit am Beispiel eines Schaufelprofils.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Insbesondere wird die Erfindung im Folgenden anhand des konkreten Beispiels erläutert, bei welchem das Bauteilmerkmal einer Welligkeit einer Oberfläche des Bauteils entspricht, wobei das Verfahren zumindest teilweise automatisiert ist. Die Erfindung ist jedoch nicht auf dieses Beispiel beschränkt.

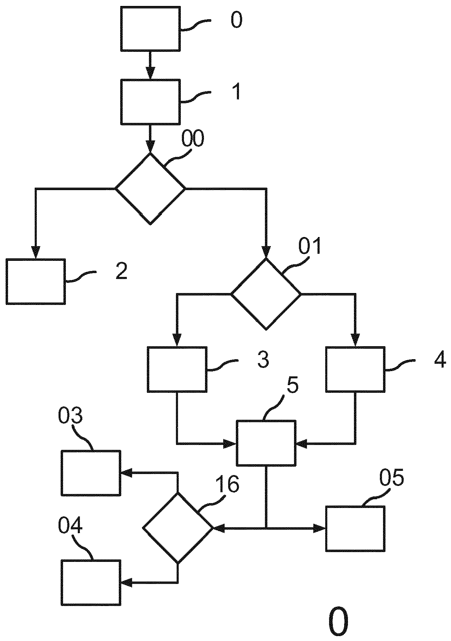

**FIG. 1** zeigt ein Ablaufdiagramm eines erfindungsgemäßen Verfahrens zum Klassifizieren eines Bauteilmerkmals, hier einer Welligkeit einer Oberfläche eines Bauteils gemäß einer bevorzugten Ausführungsform, welches zumindest teilweise computerimplementiert sein kann. Die Oberfläche des Bauteils kann hierbei dem ersten Geltungsbereich entsprechen. In einem bevorzugten ersten Schritt S1 können Messdaten einer Vielzahl von gemessenen Punkten 1 der Oberfläche automatisch eingelesen werden. Beispielsweise werden die Messdaten von einem taktilen Messverfahren bereitgestellt. In einem bevorzugten zweiten Schritt S2 kann eine Welle 2 mit zugehörigen Welleneigenschaften 3 - 7 in einem Abschnitt 10 der Oberfläche abhängig von den Messdaten identifiziert werden, wobei der Abschnitt 10 dem zweiten Geltungsbereich entsprechen kann. Wenn die Welleneigenschaften 3 - 7 eine erste Merkmalsspezifikation, insbesondere eine Welligkeitsspezifikation 11 der Oberfläche des Bauteils, erfüllen, kann in einem bevorzugten dritten Schritt S3 die Welle 2 in eine erste Klasse K1 klassifiziert werden. Insbesondere kann die Klassifizierung der Welle 2 in die erste Klasse K1 bedeuten, dass die Welligkeit als tolerierbar klassifiziert werden kann. Wenn die Welleneigenschaften 3 - 7 die erste Welligkeitsspezifikation 11 nicht erfüllen und eine zweite Merkmalsspezifikation, insbesondere eine zweite Welligkeitsspezifikation 12 im zweiten Geltungsbereich, insbesondere im Abschnitt 10 erfüllen, kann in einem bevorzugten vierten Schritt S4 die Welle 2 in eine zweite Klasse K2 klassifiziert werden. Insbesondere kann die Klassifizierung der Welle 2 in die zweite Klasse K2 bedeuten, dass die Welligkeit als tolerierbar klassifiziert werden kann. Wenn die Welleneigenschaften 3 - 7 die erste Welligkeitsspezifikation 11 und zweite Welligkeitsspezifikation 12 nicht erfüllen, wird in einem bevorzugten fünften Schritt S5 die Welle 2 in eine dritte Klasse K3 klassifiziert. Insbesondere kann die Klassifizierung der Welle 2 in die dritte Klasse K3 bedeuten, dass die Welligkeit als nicht tolerierbar klassifiziert werden kann.

In einem bevorzugten sechsten Schritt S6 können Klassifikationsdaten 13 ausgeben werden, wobei die Klassifikationsdaten 13 die Welleneigenschaften 3 - 7 der in die zweite Klasse K2 oder dritte Klasse K3 klassifizierte Welle 2, den der Welle 2 zugehörigen Abschnitt 10 und die der Welle 2 zugehörigen Klasse K, insbesondere die zweite Klasse K2 oder die dritte Klasse K3, der Welle 2 umfassen. Beispielsweise kann das Klassifizieren der Welligkeit, insbesondere die Klassifikationsdaten 13 dazu verwendet werden, eine Freigabe 14 des Bauteils für eine bestimmungsgemäße Verwendung zu erteilen, wenn eine Prüfung 27, beispielsweise eine Funktionsprüfung wie eine aerodynamische Überprüfung oder dergleichen, mit einem positiven Ergebnis abgeschlossen wird. Falls die Prüfung ein negatives Ergebnis liefert, kann dies zu einem Ausschluss 15 des Bauteils für eine bestimmungsgemäße Verwendung führen. Beispielsweise kann das Klassifizieren der Welligkeit, insbesondere die Klassifikationsdaten 13 dazu verwendet werden, ein Langzeit-Monitoring 16 des Fertigungsprozesses durchzuführen.

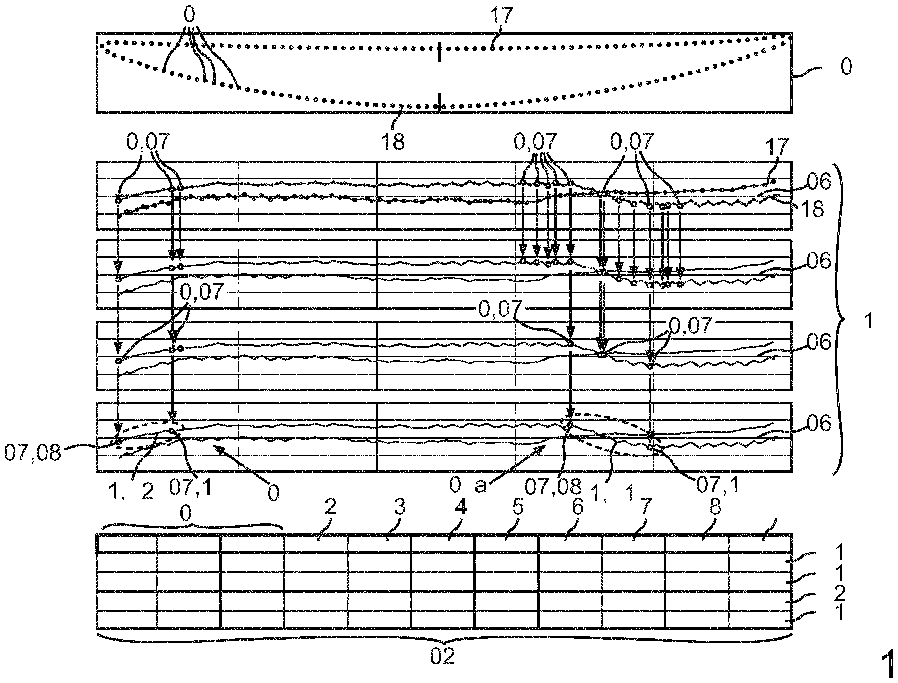

**FIG. 2** zeigt eine schematische Abbildung eines erfindungsgemäßen Verfahrens zum Klassifizieren einer Welligkeit am Beispiel eines Schaufelprofils, beispielsweise einer Blisk für eine Strömungsmaschine. Diese Abbildung soll lediglich bildlich aufzeigen, welche Verfahrensschritte das Verfahren automatisch durchführen kann. Gemäß Schritt S1 kann beispielsweise die Vielzahl der gemessenen Punkte 1 der eingelesenen Messdaten in einer Ebene liegen. Die Vielzahl der Punkte 1 kann hierbei ein Profil bzw. eine Kontur eines Schaufelprofils abbilden, welches eine Druckseite 28, eine Saugseite 29, eine Vorderkante 30 und eine Hinterkante 31 aufweisen kann. Beispielsweise kann der zweite Geltungsbereich, hier der Abschnitt 10, die gesamte Druckseite 28 oder die gesamte Saugseite 28 umfassen, oder unterteilte Bereiche der Druckseite 28 oder Saugseite 29.

Gemäß Schritt S2 kann nun die zumindest eine Welle 2 mit zugehörigen Welleneigenschaften 3 - 7 identifiziert werden. Insbesondere können hierzu Algorithmen, beispielsweise Algorithmen hinsichtlich einer Kurvendiskussion, angewandt werden, um die Welle 2 zu identifizieren. Beispielsweise kann eine Nominale 17 auf eine Gerade projiziert werden. Die Vielzahl von Punkten 1 können ebenfalls an die Gerade 17 projiziert werden, wobei eine gemessene Abweichung nicht verändert wird. Die jeweiligen Abweichungen der Vielzahl von Punkten 1 der Druckseite 28 und der Saugseite 29 können nun sichtbar gemacht werden, indem eine Skalierung der Ordinate angepasst wird. Aus der Vielzahl von Punkten 1 können nun einzelne bzw. mehrere Extrempunkte 18 automatisch identifiziert werden. Diese Extrempunkte können beispielsweise den Anfangspunkt 19 und/oder den Endpunkt 20 der Welle 2 darstellen. Wird eine Welle 2 identifiziert, kann diese in diese beispielsweise in die erste Klasse K 1 klassifiziert werden, wenn die erste Welligkeitsspezifikation 11 erfüllt ist. Ist dies der Fall, kann diese beispielsweise für die folgenden Teilschritte nicht mehr berücksichtigt werden.

Beispielsweise kann es im weiteren Verlauf des Algorithmus sein, dass identifizierte Wellen 2 der Klasse K2 und Klasse K3 weiter gefiltert werden. Beispielsweise können sich überlagernde oder direkt angrenzende Wellen 2 zusammengefasst werden, vorzugsweise, indem lediglich diejenige Welle 2 weiter betrachtet wird, deren Welleneigenschaften 3 - 7 weiter entfernt sind von der ersten Welligkeitsspezifikation 11. Am Ende des Schrittes S2 können beispielsweise zwei Wellen 2 identifiziert worden sein, jeweils eine in einem vorderen Abschnitt 10a und eine in einem hinteren Abschnitt 10b. Beispielsweise erfüllt die Welle 2 des vorderen Abschnittes 10a die zweite Welligkeitsspezifikation 12 speziell für den vorderen Bereich 10a nicht, sodass diese in die dritte Klasse K3 klassifiziert wird. Beispielsweise erfüllt die Welle 2 des hinteren Abschnittes 10b die zweite Welligkeitsspezifikation 12 speziell für den hinteren Bereich 10b, sodass diese in die dritte Klasse K2 klassifiziert werden kann. Beispielsweise kann die Welle 2 im hinteren Bereich 10b bereits durch vorhergehende Messdaten bekannt sein, weil diese beispielsweise bei der Fertigung reproduzierbar bzw. systematisch auftritt, zum Beispiel durch einen Blocksprung eines Fräswerkzeuges. Insbesondere kann es sein, dass sich die Welle 10b aerodynamisch substantiiert als unproblematisch erwiesen hat und folglich ein erster Anforderungsbereich 21 der ersten Welligkeitsspezifikation 11 um einen Erweiterungsbereich 23 zum zweiten Anforderungsbereich 22 der zweiten Welligkeitsspezifikation 12 im hinteren Abschnitt 10b erweitert wurde. Hingegen kann die Welle 2 im vorderen Bereich 10a unklar sein und muss weiter überprüft werden.

Folglich können die Klassifikationsdaten 13, beispielsweise in Form einer Tabelle, ausgeben werden. Die Klassifikationsdaten 13 können die Welleneigenschaften 3 - 7 der in die zweite Klasse K2 und in die dritte Klasse K3 klassifizierte Welle 2 umfassen, sowie den der Welle 2 zugehörigen Abschnitt 10 und die der Welle 2 zugehörige zweite Klasse K2 bzw. die dritte Klasse K3 der Welle 2.

Beispielsweise kann der Abschnitt 10 Informationen umfassen über die zugehörige vermessene Schaufel, eine Vermessungsebene und eine Seite des Schaufelprofils. Die Welleneigenschaften 3 - 7 kann eine Startposition 3, eine Endposition 4, eine Amplitude 5, eine Halbwellenlänge 6 und/oder eine Steigung 7 umfassen. Die Klassifikationsdaten 13 können darüber hinaus einen relativen Wert 8 der gemessenen Steigung zu einem gemäß der ersten oder zweiten Anforderungsbereich 21, 22 festgelegten zulässigen Steigung umfassen, sowie einen relativen Wert 9 der gemessenen Amplitude zu einem gemäß der ersten oder zweiten Anforderungsbereich 21, 22 festgelegten zulässigen Amplitude. Eine Klasse K kann vorzugsweise die zweite Klasse K2 oder die dritte Klasse K3, aber auch die erste Klasse K1 sein.

### Bezugszeichenliste:

- 1: gemessene Punkte
- 2: Welle
- 3: Startposition der Welle
- 4: Endposition der Welle
- 5: Amplitude der Welle
- 6: Halbwellenlänge der Welle
- 7: Steigung der Welle
- 8: Relativer Wert der Steigung
- 9: Relativer Wert der Amplitude
- 10: Abschnitt
- 11: Erste Merkmalsspezifikation, Erste Welligkeitsspezifikation
- 12: Zweite Merkmalsspezifikation, Zweite Welligkeitsspezifikation
- 13: Klassifikationsdaten
- 14: Freigabe
- 15: Ausschluss
- 16: Langzeit-Monitoring
- 17: Nominale
- 18: Extrempunkt
- 19: Anfangspunkt
- 20: Endpunkt
- 27: Prüfung
- 28: Druckseite
- 29: Saugseite
- 30: Vorderkante

## Patentansprüche

1. Verfahren zum Klassifizieren eines Bauteilmerkmals eines Bauteils, insbesondere einer Blisk oder eines Teils einer Blisk für eine Strömungsmaschine, welches mit einem Fertigungsprozess hergestellt ist, wobei das Bauteilmerkmal abhängig von einer ersten Merkmalsspezifikation (11) und von einer zweiten Merkmalsspezifikation (12) für eine Messgröße des Bauteilmerkmals klassifiziert wird, wobei ein zweiter Toleranzbereich der zweiten Merkmalsspezifikation (12) gegenüber einem ersten Toleranzbereich der ersten Merkmalsspezifikation (11) erweitert ist, wobei ein zweiter Geltungsbereich des Bauteils für die zweite Merkmalsspezifikation (12) kleiner als ein erster Geltungsbereich des Bauteils für die erste Merkmalspezifikation (11) ist, wobei der Fertigungsprozess im zweiten Geltungsbereich reproduzierbar und/oder systematisch eine größere mittlere Abweichung der Messgröße als im ersten Geltungsbereich hervorruft.

2. Verfahren nach Anspruch 1, bei dem für die bestimmungsgemäße Verwendung des Bauteils im zweiten Geltungsbereich eine größere Abweichung der Messgröße als im ersten Geltungsbereich tolerierbar ist.

3. Verfahren nach Anspruch 1 oder 2, wobei die Abweichung hervorgerufen ist durch eine systematische Ungenauigkeit in dem Fertigungsprozess des Bauteils, wobei abhängig von der Klassifikation des Bauteilmerkmals das Bauteil verwendet wird.

4. Verfahren nach einem der vorherigen Ansprüche, wobei das Bauteilmerkmal eine Welligkeit einer Oberfläche des Bauteils umfasst, wobei die erste (11) und die zweite Merkmalsspezifikation (12) jeweils einen Welligkeitstoleranzbereich definiert.

5. Verfahren nach einem der vorherigen Ansprüche, wobei die erste Merkmalsspezifikation im ersten Geltungsbereich konstant ist, wobei die zweite Merkmalsspezifikation im zweiten Geltungsbereich konstant ist.

6. Verfahren nach einem der vorherigen Ansprüche, wobei der zweite Toleranzbereich auf einer aufgrund des Fertigungsprozesses des Bauteils reproduzierbaren Überschreitung des ersten Toleranzbereiches der Messgröße im zweiten Geltungsbereich basiert, wobei basierend auf einer Analyse hinsichtlich einer Auswirkung der reproduzierbaren Überschreitung auf eine Anforderung des Bauteils im zweiten Geltungsbereich der zweite Toleranzbereich freigegeben wurde.

7. Verfahren nach einem der vorherigen Ansprüche, wobei die Messgröße mittels einem taktilen oder optischen Messverfahren ermittelt wird.

8. Verfahren nach einem der vorherigen Ansprüche, welches zumindest teilweise computerimplementiert ist.

9. Verfahren nach einem der vorherigen Ansprüche, bei dem im ersten Geltungsbereich, insbesondere in einem mittleren Bereich einer Druckseite und/oder Saugseite der Blisk oder einer Schaufel der Blisk, eine Abweichung des Bauteilmerkmals, insbesondere einer Welligkeit, eine größere Beeinträchtigung einer ersten Performanceeigenschaft, insbesondere einem Wirkungsgrad, einer Stabilität und/oder ein Betriebsbereich, hat, als im zweiten Geltungsbereich, insbesondere in einem Bereich einer Vorderkante und/oder einer Hinterkante der Schaufel der Blisk.

10. Verfahren nach einem der vorherigen Ansprüche, bei dem der Fertigungsprozess einen Schritt zur Verbesserung eines weiteren Bauteilmerkmals, insbesondere eine Härte und/oder eine Oberflächenbeschaffenheit, umfasst, welche im zweiten Geltungsbereich, insbesondere in einem Bereich einer Vorderkante und/oder einer Hinterkante einer Schaufel der Blisk, einen höheren Beitrag zur Verbesserung einer zweiten Performanceeigenschaft, insbesondere eine Lebensdauer und/oder eine Robustheit, des Bauteils aufweist als im ersten Geltungsbereich.

11. Verfahren nach Anspruch 10, bei dem der Schritt zur Verbesserung des weiteren Bauteilmerkmals im zweiten Geltungsbereich mit einer größeren Intensität ausgeführt wird, als im ersten Geltungsbereich.

12. Verfahren zum Klassifizieren eines Bauteils, insbesondere einer Blisk oder eines Teils einer Blisk für eine Strömungsmaschine, basierend auf einem Verfahren gemäß einem der vorherigen Ansprüche.

13. Verwendung eines Bauteils, insbesondere einer Blisk für eine Strömungsmaschine, abhängig von einem Verfahren gemäß Anspruch 12.

14. Verwendung nach Anspruch 10, bei der das Bauteil bestimmungsgemäß verwendet wird, insbesondere für den Betrieb eines Flugtriebwerks eingesetzt wird, unter der Voraussetzung, dass die Messgröße im ersten Geltungsbereich die erste Merkmalsspezifikation (11) erfüllt und im zweiten Geltungsbereich die zweite Merkmalsspezifikation (12) erfüllt oder wenn die Messgröße im ersten Geltungsbereich die erste Merkmalsspezifikation (11) erfüllt und im zweiten Geltungsbereich nur die zweite Merkmalsspezifikation (12) erfüllt.

15. Verwendung nach Anspruch 13 oder 14, wobei das Bauteil nicht bestimmungsgemäß verwendet wird, wenn die Messgröße die erste Merkmalsspezifikation (11) im ersten Geltungsbereich nicht erfüllt oder die zweite Merkmalsspezifikation (12) im zweiten Geltungsbereich nicht erfüllt.
